Europäisches Patentamt

European Patent Office

Office européen des brevets

(11) Veröffentlichungsnummer: **0 446 451 A2**

# (12) EUROPÄISCHE PATENTANMELDUNG

(21) Anmeldenummer: 90124257.8

(51) Int. Cl.5: **H02J 3/18**, G05F 1/70

(22) Anmeldetag: **14.12.90**

(30) Priorität: **12.03.90 DE 4007826**

(43) Veröffentlichungstag der Anmeldung:
**18.09.91 Patentblatt 91/38**

(84) Benannte Vertragsstaaten:
**CH DE ES FR IT LI**

(71) Anmelder: **Roederstein Spezialfabriken für Bauelemente der Elektronik und Kondensatoren der Starkstromtechnik GmbH Ludmillastrasse 23/25 W-8300 Landshut(DE)**

(72) Erfinder: **Huber, Robert Max-Reger-Strasse 3 W-8303 Rottenburg(DE)**
Erfinder: **Hauke, Otmar Florastrasse 25 W-8300 Landshut(DE)**

(74) Vertreter: **Dipl.-Phys.Dr. Manitz Dipl.-Ing.Dipl.-Wirtsch.-Ing. Finsterwald Dipl.-Phys. Rotermund Dipl.-Chem.Dr. Heyn B.Sc.(Phys.) Morgan Robert-Koch-Strasse 1 W-8000 München 22(DE)**

(54) **Verfahren zum Betrieb eines Blindleistungsreglers.**

(57) Es wird ein Verfahren zum Betrieb eines Blindleistungsreglers beschrieben, bei dem zum Zwecke der Ermöglichung eines beliebigen Anschlusses von Stromwandler und der Meßspannung - bei Hochspannung ist über einen Spannungswandler anzuschließen - eine automatische Initialisierung der Wandlereinbaulage und des Meßspannungsanschlusses erfolgt und entsprechende Korrekturfaktoren gebildet werden. Außerdem wird die Bestimmung der C/k-Werte automatisch vorgenommen und eine Gesamtkompensation der jeweiligen Regeldifferenz durchgeführt.

Fig. 1

EP 0 446 451 A2

Die Erfindung betrifft ein Verfahren zum Betrieb eines mittels eines Mikroprozessors gesteuerten Blindleistungsreglers, der über Stromwandler und Meßspannungsanschluß mit dem eine Blindstromkompensation erfordernden Netz verbunden ist und in Abhängigkeit von ermittelten C/k-Werten die Zu- und Abschaltung von Kondensatorstufen steuert.

Blindleistungsregler dienen zur zentralen Kompensation der Blindleistung. Dabei wird im Blindleistungsregler der jeweils gemessene cos-phi mit dem am Gerät eingestellten Soll-cos-phi verglichen, und bei einem Überschreiten oder Unterschreiten dieses Wertes werden Schaltbefehle erzeugt, die über entsprechende Relais die Zuschaltung oder Abschaltung von Kondensatorstufen durchführen.

Für jeden Blindleistungsregler müssen dabei die den einzelnen Kondensatorstufen zugeordneten C/k-Werte bekannt sein, die der beim Zuschalten der betreffenden Stufe erreichten Blindstromänderung entsprechen. In Kenntnis dieser C/k-Werte kann dann während des normalen Reglerbetriebs die erforderliche Auswahl der zur Kompensation benötigten Stufen getroffen werden, wobei es üblich ist, die zur Kompensation benötigten Stufen nacheinander zuzuschalten und sich auf diese Weise der geforderte Gesamtkompensation anzunähern.

Nachteilig bei den bekannten Blindleistungsreglern ist nicht nur, daß die C/k-Wert-Bestimmung in der jeweiligen Anlage vom Benutzer selbst vorgenommen werden muß und die nacheinander erfolgende Zuschaltung nach einem festen Schaltschema abläuft, was insbesondere bei ungleicher Stufenleistung zu mehr Schaltspielen führt, sondern es ist vor allem ungünstig, daß eine ordnungsgemäße Funktionsweise des Blindleistungsreglers nur dann möglich ist, wenn bei der Montage eine korrekte und genau vorgegebene Einbaulage des erforderlichen Stromwandlers und der richtige Anschluß der Meßspannung - bei Hochspannung ist über Spannungswandler anzuschließen - gewährleistet wird, was keineswegs immer der Fall ist.

Aufgabe der Erfindung ist es daher, ein Verfahren zum Betrieb eines Blindleistungsreglers der eingangs angegebenen Art zu schaffen, das nicht nur eine automatische Berechnung der C/k-Werte gewährleistet, sondern vor allem eine beliebige Einbaulage der Wandler, d.h. eine freie Wählbarkeit der Stromwandlerphase und der Meßspannungsphase zuläßt.

Gelöst wird diese Aufgabe nach der Erfindung im wesentlichen dadurch, daß nach jedem Anlegen der Betriebsspannung an den Blindleistungsregler bei am Reglermeßpunkt vorliegendem Strombezug und induktivem Leistungsfaktor eine elektronische Überprüfung der Einbaulage des Stromwandlers und der richtige Anschluß der Meßspannung - bei Hochspannung ist über Spannungswandler anzuschließen - erfolgt und dazu der jeweilige Phasenverschiebungswinkel zwischen Spannung und Strom bestimmt und in Abhängigkeit von diesem Phasenverschiebungswinkel und gegebenenfalls zumindest einer zusätzlichen, nach Probezuschaltung von Kondensatoren durchgeführten Strommessung ein Korrekturfaktor in Form eines Korrekturwinkels ermittelt und der jeweils gemessene Phasenverschiebungswinkel unter Berücksichtigung des Korrekturwinkels zu einem relativen Phasenverschiebungswinkel umgewandelt wird, daß dann durch probeweises Zuschalten jeder einzelnen Kondensatorstufe die jeweils erzielte Blindstromänderung berechnet und als C/k-Wert abgespeichert wird, und daß während des normalen Regelbetriebs die Blindstromabweichungen vom vorgebbaren cos-phi-Sollwert berechnet und zur Beseitigung der Regeldifferenz eine über die gespeicherten C/k-Werte ausgewählte Anzahl von Kondensatorstufen gemeinsam zu- oder abgeschaltet wird.

Durch die vor dem normalen Regelbetrieb durchgeführte Ermittlung der Wandler-Einbaulage und die Korrekturwinkelbestimmung kann der absolut gemessene Phasenwinkel in einen relativen Phasenwinkel umgewandelt werden, und zwar bei beliebiger Einbauphase und beliebiger Wandler-Einbaulage, so daß separate Anschluß- und Bedienungsvorschriften entfallen und nur noch bezüglich der Meßspannung zwischen den Anschlußarten Phase-Nulleiter und Phase-Phase durch entsprechende Reglereinstellung unterschieden werden muß.

Von Vorteil ist ferner, daß die im normalen Regelbetrieb erfolgende Zu- oder Abschaltung von Kondensatorstufen nicht nach einem vorgebbaren Schaltschema einzeln, sondern unter Berücksichtigung einer gewählten Kreis- oder Reihenschaltung entsprechend dem Bedarf erfolgt. Auf diese Weise wird eine wesentlich kürzere Ausregelzeit erreicht und sichergestellt, daß die Anzahl der erforderlichen Schaltungen klein bleibt. Die Schaltzeit wird vorzugsweise lastabhängig gewählt und kann bei Bedarf verlängert werden.

Weitere vorteilhafte Merkmale der Erfindung ergeben sich aus den Unteransprüchen.

Die Erfindung wird nachfolgend anhand der Zeichnung beispielsweise näher erläutert; in der Zeichnung zeigt:

Fig. 1     ein Zeigerdiagramm der möglichen Winkelkombination bei Anschluß der Meßspannung zwischen Phase und Nulleiter,

Fig. 2     ein Zeigerdiagramm der möglichen Winkelkombinationen bei Anschluß der Meßspannung zwischen Phase und Phase, und

Fig. 3    ein Blockschaltbild eines nach dem erfindungsgemäßen Verfahren arbeitenden Blindleistungsreglers.

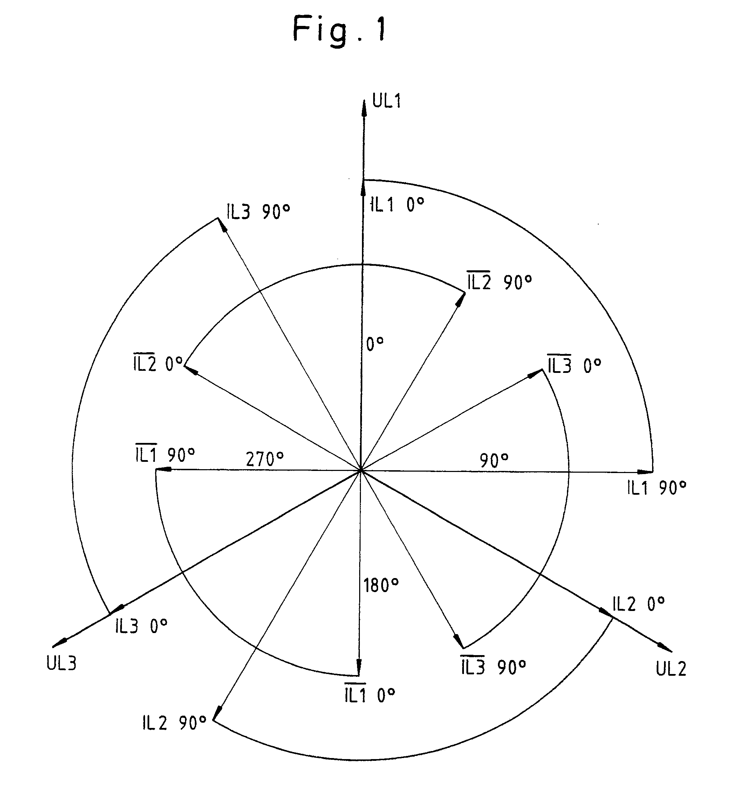

Das Zeigerdiagramm nach Fig. 1 stellt alle möglichen Winkelkombinationen für den Fall des Meßspannungsanschlusses zwischen der Phase L1 und dem Nulleiter dar, und dabei ist darauf hinzuweisen, daß sich die Lage der Winkelkombinationen bei einem Anschluß zwischen einer anderen Phase und dem Nulleiter nicht ändert, sondern in diesem Fall lediglich die Bezeichnungen der Zeiger zu ändern sind.

Unter der generell geltenden Voraussetzung, daß bei der Zuschaltung des Blindleistungsreglers am Reglermeßpunkt-Strombezug und ein induktiver Leistungsfaktor gegeben ist, liegt der mögliche Phasenverschiebungswinkel zwischen Spannung und Strom jeweils zwischen 0 und 90°. Dieser Bereich ist im Diagramm auch jeweils durch zwei Zeiger für 0° und 90° dargestellt, d.h. beispielsweise durch die Zeiger IL1 0° und IL1 90° im Zusammenhang mit der Spannung UL1.

Da der Stromwandler stets auf zwei verschiedene Arten angeschlossen werden kann, bestehen durch Vertauschen der Stromwandleranschlüsse K und L jeweils auch zwei Möglichkeiten. Der falsche KL-Anschluß ist im Diagramm nach Fig. 1 jeweils durch einen Strich über dem entsprechenden Zeiger gekennzeichnet.

Der Aufbau des Zeigerdiagramms ist leicht verständlich, wenn beispielsweise davon ausgegangen wird, daß der Stromwandler richtig in Phase L1 eingebaut ist.

In diesem Falle ergibt sich ein Phasenverschiebungswinkel von 0 bis 90°.

Ein Vertauschen der KL-Anschlüsse hätte zur Folge, daß der erhaltene Bereich nunmehr zwischen 180 und 270° liegen würde.
Werden die gleichen Überlegungen für die Phasen L2 und L3 angestellt, dann ergibt sich genau der Aufbau des Diagramms nach Fig. 1.

Erfindungsgemäß wird das erhaltene Zeigerdiagramm in spezieller Weise ausgewertet, wobei von der Erkenntnis Gebrauch gemacht wird,

daß sich die Bereiche teilweise überschneiden,

daß sich immer nur zwei Bereich überschneiden, und

daß im Winkelbereich von 360° eine 30°-Teilung entstanden ist.

Ausgehend von diesen Tatsachen wird die Einbaulage des Stromwandlers nach dem erfindungsgemäßen Verfahren ermittelt, und es wird in Abhängigkeit von der festgestellten Einbaulage ein Korrekturwinkel bestimmt, mittels dessen dann der absolut gemessene Winkel in eine im weiteren Verfahren berücksichtigte relative Phasenverschiebung umgewandelt wird.

Die nachfolgende Tabelle zeigt die Korrekturfaktoren bzw. Korrekturwinkel für die Meßart Phase - Nulleiter:

| Stromwandler | | | |
|---|---|---|---|
| Einbauphase | Einbaulage | | Korrekturfaktor |
| L 1 | K | L | 0 |
| L 1 | L | K | 180 |
| L 2 | K | L | 120 |
| L 2 | L | K | 300 |
| L 3 | K | L | 240 |
| L 3 | L | K | 60 |

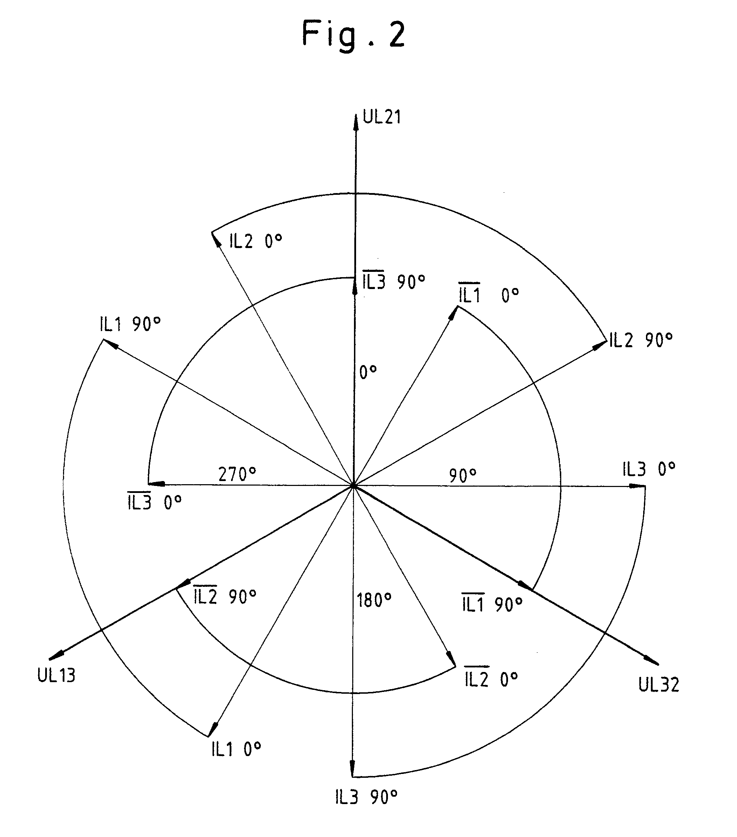

Fig. 2 zeigt ein Zeigerdiagramm mit allen möglichen Winkelkombinationen für den Fall, daß die Meßspannung zwischen den Phasen L1 und L2 angeschlossen ist. Auch in diesem Falle ändern sich bei einem anderen Anschluß der Meßspannung zwischen zwei Phasen nicht die Lagen der Zeiger zueinander sondern lediglich die Bezeichnungen der Zeiger.

In entsprechender Weise wie im Falle des anhand der Fig. 1 erläuterten Zeigerdiagramms liegt auch bei dieser Anschlußart der mögliche Phasenverschiebungswinkel stets zwischen 0 und 90°, und durch Vertauschen der Stromwandleranschlüsse K und L ergeben sich zwei Möglichkeiten, wobei der falsche KL-Anschluß wiederum durch einen Strich über dem entsprechenden Zeiger gekennzeichnet ist.

Der Gesamtaufbau des Zeigerdiagramms wird verständlich, wenn beispielsweise angenommen wird, daß der Stromwandler richtig in Phase L1 eingebaut ist. Dabei ergibt sich ein Phasenverschiebungswinkel von 210 bis 300°. Ein Vertauschen der KL-Anschlüsse hätte zur Folge, daß der Bereich zwischen 30 und 120° liegen würde. Gleiches gilt auch für die Phasen L2 und L3.

Auch bei dieser Anschlußart ist wiederum ersichtlich,

daß sich die Bereiche teilweise überschneiden,

daß sich immer nur zwei Bereiche überschneiden, und

daß eine 30°-Teilung entstanden ist.

Unter Ausnutzung dieser Gegebenheiten wird nach dem erfindungsgemäßen Verfahren wiederum ein Korrekturfaktor bzw. Korrekturwinkel bestimmt, der es gestattet, den absolut gemessenen Winkel in die gesuchte relative Phasenverschiebung umzuwandeln.

Diese Korrekturfaktoren bzw. Korrekturwinkel sind für die Meßart Phase - Phase in nachfolgender Tabelle dargestellt:

| Stromwandler | | | |
|---|---|---|---|
| Einbauphase | Einbaulage | | Korrekturfaktor |
| L 1 | K | L | 210 |
| L 1 | L | K | 30 |
| L 2 | K | L | 330 |
| L 2 | L | K | 150 |
| L 3 | K | L | 90 |
| L 3 | L | K | 270 |

Aus den vorstehenden Erläuterungen ergibt sich, daß zur Ermittlung der Korrekturfaktoren bei Anwendung des erfindungsgemäßen Verfahrens am Blindleistungsregler vorab über einen Codierschalter die Meßart Phase - Nulleiter oder Phase - Phase eingestellt werden muß. Diese Einstellung kann ohne weiteres und problemfrei vorgenommen werden, da die entsprechende Einbaulage problemfrei erkennbar ist.

Bei Inbetriebnahme eines nach dem erfindungsgemäßen Verfahren arbeitenden Blindleistungsreglers wird sofort eine Phasenwinkelmessung durchgeführt. Dieser Winkel stellt die absolute Verschiebung zwischen Spannung und Strom dar. Der mögliche Bereich dieses Winkels liegt zwischen 0 und 360°.

Unter der stets zu treffenden Voraussetzung, daß am Reglermeßpunkt Strombezug und ein induktiver Leistungsfaktor gegeben ist, sind je nach eingestellter Meßart folgende Kombinationen der Einbaulagen möglich:

EP 0 446 451 A2

## Fuer die Messart Phase-Nulleiter :

| Winkel in Grad | Stromwandleranschluss | |
|---|---|---|
| | K L | L K |
| 0 — 30 | L1 | L2 |
| 31 — 60 | L1 | |
| 61 — 90 | L1 | L3 |
| 91 — 120 | | L3 |
| 121 — 150 | L2 | L3 |
| 151 — 180 | L2 | |
| 181 — 210 | L2 | L1 |
| 211 — 240 | | L1 |
| 241 — 270 | L2 | L1 |
| 271 — 300 | L2 | |
| 301 — 330 | L2 | L2 |
| 331 — 360 | | L2 |

## Fuer die Messart Phase-Phase :

| Winkel in Grad | Stromwandleranschluss | |
|---|---|---|
| | K L | L K |
| 0 — 30 | L2 | |
| 31 — 60 | L2 | L1 |
| 61 — 90 | | L1 |
| 91 — 120 | L3 | L1 |
| 121 — 150 | L3 | |
| 151 — 180 | L3 | L2 |
| 181 — 210 | | L2 |
| 211 — 240 | L1 | L2 |
| 241 — 270 | L1 | |
| 271 — 300 | L1 | L3 |
| 301 — 330 | | L3 |
| 331 — 360 | L2 | L3 |

Zeigt die nach dem erfindungsgemäßen Verfahren vorgenommene Überprüfung für den betreffenden Fall der Messung nur eine Einbaumöglichkeit, so liegt der Korrekturfaktor sofort fest, und es kann das Verfahren mit der Bestimmung der Stufenleistungen der Kompensationsanlage fortgeführt werden.

Zeigt die Überprüfung, daß zwei Möglichkeiten der Einbaulage bestehen, dann wird als zusätzliches Kriterium der Strom berücksichtigt.

Zur Beurteilung des Stromes wird ein Grenzwinkel eingeführt, der bei den ermittelten 30°-Bereichen jeweils vom kleineren Endwinkel gebildet ist. Dieser Winkel stellt zugleich für einen Bereich den Leistungsfaktor 1,00 dar.

Die Art der Berücksichtigung des Stroms zur Beseitigung der Mehrdeutigkeit wird anhand des nachfolgenden Beispieles erläutert:

Der ermittelte Bereich soll bei der Meßart Phase - Nulleiter zwischen 60 und 90° liegen. In diesem Falle ist der Grenzwinkel 60°. Dieser Winkel stellt für den Stromwandleranschluß L3 und LK den Leistungsfaktor 1,00 dar.

Gemäß der Erfindung werden nun einzelne Stufen zugeschaltet, und nach jedem Schaltvorgang wird eine Strommessung durchgeführt. Nach Überschreiten des Grenzwinkels werden die beiden letzten Meßwerte miteinander verglichen. Wenn der Strom betragsmäßig größer wird, bedeutet dies, daß der Leistungs-

5

faktor 1,00 überschritten wurde. Somit ist eine eindeutige Bestimmung der richtigen Einbaulage und des Korrekturfaktors möglich.

Wie bereits erwähnt, werden nach dem Ermitteln des Korrekturfaktors die Stufenleistungen der einzelnen Stufen bestimmt. Dazu wird jede Stufe einzeln geschaltet und vor und nach dem Zuschalten jeweils eine Blindstrommessung durchgeführt. Die Blindstromänderung ist dabei ein Maß für die Kondensatorstufenleistung, so daß nach Beendigung dieses Ermittlungsvorgangs alle für das weitere Regelverfahren benötigten C/k-Werte vorliegen.

Während des normalen Regelbetriebs werden die Blindstromabweichungen vom vorgegebenen cos-phi-Sollwert ermittelt. Die jeweilige Abweichung dient unter Berücksichtigung der bereits gebildeten C/k-Werte zur Auswahl der richtigen Stufen, wobei pro Stellvorgang nicht nur immer eine Stufe, sondern alle notwendigen Stufen geschaltet werden, um die aufgetretene Regeldifferenz zu beseitigen.

Durch die automatische Bestimmung der C/k-Werte werden bei bekannten Verfahren mögliche Falscheinstellungen ausgeschlossen, und damit ist sichergestellt, daß weder zu hohe Blindstromkosten bei zu hoher Einstellung noch eine Beeinträchtigung der Lebensdauer der Kondensatorstufen bei zu kleiner Einstellung auftritt.

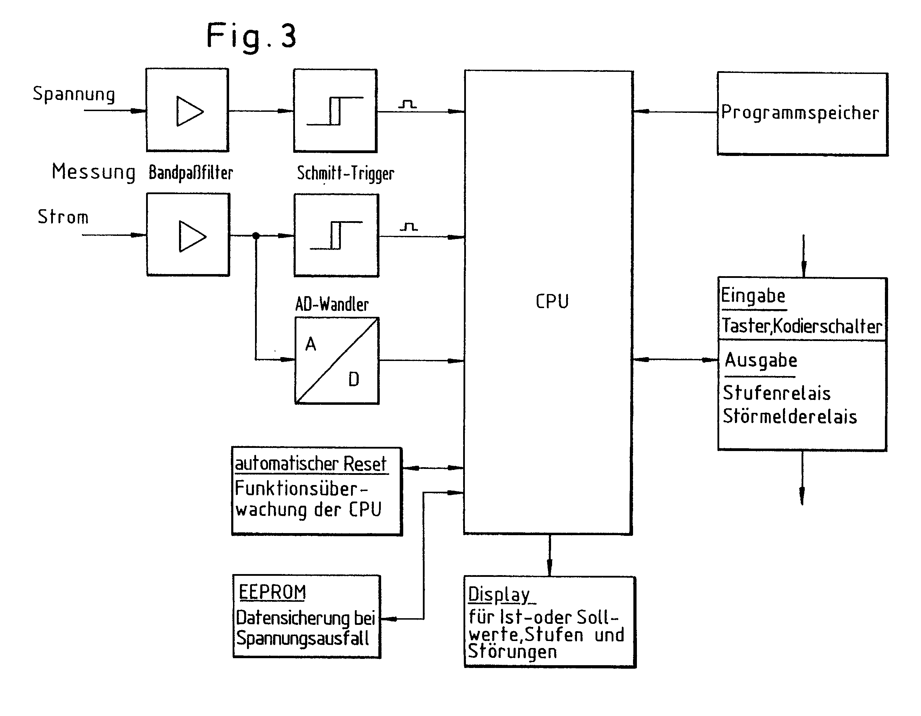

Fig. 3 zeigt ein Beispiel für den Aufbau eines nach dem erfindungsgemäßen Verfahren arbeitenden Blindleistungsreglers in Form eines Blockschaltbildes. Dem mit CPU bezeichneten Mikroprozessor wird die gemessene Spannung über einem Bandpaßfilter und einen Schmitt-Trigger zugeführt, und an weiteren Eingängen erhält der Mikroprozessor die Stromwerte über einem Bandpaßfilter und einen Schmitt-Trigger sowie parallel zum Schmitt-Trigger über einen Analog/Digital-Wandler.

Über eine Eingabeeinheit kann zwischen der Meßart Phase - Phase und Phase - Nulleiter gewählt werden; dabei ist es auch möglich, zwischen einer Reihenschaltung und einer Kreisschaltung zu wählen, wobei die Reihenschaltung üblicherweise im Zusammenhang mit Filterkreisanlagen Verwendung findet, und außerdem ist über diese Einheit der Soll-cos-phi-Wert vorgebbar.

Über eine Ausgabeeinheit erfolgt die Ansteuerung der Stufenrelais und gegebenenfalls eines Störmelderelais. Des weiteren können mit dem Mikroprozessor Einheiten zur Funktionsüberwachung, zur Datensicherung und zur Anzeige verbunden sein.

## Patentansprüche

1. Verfahren zum Betrieb eines mittels eines Mikroprozessors gesteuerten Blindleistungsreglers, der über Stromwandler und Meßspannungsanschluß mit dem eine Blindstromkompensation erfordernden Netz verbunden ist und in Abhängigkeit von ermittelten C/k-Werten die Zu- und Abschaltung von Kondensatorstufen steuert,

   dadurch **gekennzeichnet,**

   daß nach jedem Anlegen der Betriebsspannung an den Blindleistungsregler bei am Reglermeßpunkt vorliegendem Strombezug und induktivem Leistungsfaktor eine elektronische Überprüfung der Einbaulage des Stromwandlers und des Meßspannungsanschlusses erfolgt und dazu der jeweilige Phasenverschiebungswinkel zwischen Spannung und Strom bestimmt und in Abhängigkeit von diesem Phasenverschiebungswinkel und gegebenenfalls zumindest einer zusätzlichen, nach Probezuschaltung von Kondensatoren durchgeführten Strommessung ein Korrekturfaktor in Form eines Korrekturwinkels ermittelt und der jeweils gemessene Phasenverschiebungswinkel unter Berücksichtigung des Korrekturwinkels zu einem relativen Phasenverschiebungswinkel umgewandelt wird,

   daß dann durch probeweises Zuschalten jeder einzelnen Kondensatorstufe die jeweils erzielte Blindstromänderung berechnet und als C/k-Wert abgespeichert wird, und daß während des normalen Regelbetriebs die Blindstromabweichungen vom vorgebbaren cos-phi-Sollwert berechnet und zur Beseitigung der Regeldifferenz eine über die gespeicherten C/k-Werte ausgewählte Anzahl von Kondensatorstufen gemeinsam zu- oder abgeschaltet wird.

2. Verfahren nach Anspruch 1,
   dadurch **gekennzeichnet,**
   daß vor Beginn der Korrekturwinkelermittlung in Abhängigkeit von der Einbaulage des Spannungswandlers oder des Meßspannungsanschlusses die Meßart Phase-Phase oder Phase-Nulleiter vorgegeben wird.

3. Verfahren nach Anspruch 1 und 2,
   dadurch **gekennzeichnet,**
   daß der sich über 360° erstreckende Bereich möglicher Phasenverschiebungswinkel in Winkelbereiche von jeweils 30° unterteilt und aus der Relativlage zwischen diesen festen Winkelbereichen und den jeweils ermittelten Strom- und Spannungsvektoren der Korrekturwinkel ermittelt wird.

4. Verfahren nach einem der Ansprüche 1 bis 3,
dadurch **gekennzeichnet,**
daß bei Durchführung von Strommessungen zur Klärung von Mehrdeutigkeiten nacheinander Kondensatorstufen zugeschaltet werden und nach jeder Zuschaltung eine Strommessung durchgeführt wird, und daß nach dem Überschreiten eines Grenzwinkels, der durch den kleineren Endwinkel des betreffenden Winkelbereichs bestimmt ist, ein Vergleich der beiden letzten Meßwerte vorgenommen und in Abhängigkeit davon, ob der Strom betragsmäßig größer oder kleiner wurde, der Korrekturwinkel festgelegt wird.

5. Verfahren nach einem der vorhergehenden Ansprüche,
dadurch **gekennzeichnet,**
daß im normalen Regelbetrieb die Zuschaltzeiten lastabhängig variabel gewählt werden.

# Fig. 1

# Fig. 2

# Fig. 3

Spannung → Bandpaßfilter → Schmitt-Trigger → CPU

Messung

Strom → Bandpaßfilter → Schmitt-Trigger → CPU

AD-Wandler
A / D

Programmspeicher

Eingabe
Taster, Kodierschalter

Ausgabe
Stufenrelais
Störmelderelais

automatischer Reset
Funktionsüberwachung der CPU

EEPROM
Datensicherung bei
Spannungsausfall

Display
für Ist-oder Sollwerte, Stufen und
Störungen

EP 0 446 451 A2